# EUROPEAN PATENT APPLICATION

(11) **EP 2 191 886 A1**
(43) Date of publication of application: **02.06.2010**
(21) Application number: 08832392.8
(22) Date of filing: 10.09.2008
(51) Int. Cl.: B01D 63/02, B01D 65/02

(54) **HOLLOW YARN FILM FILTERING APPARATUS**

(30) Priority: 18.09.2007 JP 2007240680; 11.06.2008 JP 2008152372
(71) Applicant: Asahi Kasei Chemicals Corporation, Tokyo 101-8101 (JP)
(72) Inventor: NEJIGAKI, Tatsuo, Tokyo 101-8101 (JP); HASHIMOTO, Tomotaka, Tokyo 101-8101 (JP)
(74) Representative: von Kreisler Selting Werner
(86) International application number: PCT/JP2008/066300
(87) International publication number: WO 2009/037999

(57) **Abstract**

Provided is a hollow yarn film filtering apparatus (7) for filtering a stock solution by passing it through a hollow yarn film dipped in a treating bath (24). The hollow yarn film filtering apparatus (7) is **characterized in that** filtered liquid discharge passages (12a and 12b) are connected to a filtered liquid discharging header pipe (11) through ON/OFF valves (26a and 26b), respectively, in that the filtered liquid discharging header pipe (11) is connected to the suction port of a suction pump (25), in that an ON/OFF valve (30) is connected to the filtered liquid discharging header pipe (11) connected to the discharge port of the suction pump (25), in that back wash passages (29a and 29b) are connected through ON/OFF valves (28a and 28b), respectively, to a back wash header pipe (27) branched from between the ON/OFF valve (30) and the suction pump (25) of the filtered liquid discharging header pipe (11), and in that the back wash passages (29a and 29b) include a plurality of hollow yarn filtering film modules (16a and 16b), which communicate on the respective upstream sides of the ON/OFF valves (26a and 26b) of the filtered liquid discharge passages (12a and 12b) so that they are enabled to back-wash each other between the plural hollow yarn filtering film modules (16a and 16b) by the ON/OFF operations of the ON/OFF valves (26a, 26b, 28a, 28b and 30).

## Description

### TECHNICAL FIELD

The present invention relates to a filtration equipment of hollow fiber membrane (i.e. hollow yarn film filtering apparatus), which allows mutual backwash between hollow fiber filtration membrane modules.

### BACKGROUND ART

JP-A-9-220446 (Patent Document 1) describes backwash by an external pressure type hollow fiber membrane module as a conventional filtration equipment of hollow fiber membrane.

[Patent Document 1] JP-A-9-220446

However, the above described conventional example requires a wash pump or a backwash tank for washing off suspended matter or the like adhering to a hollow fiber filtration membrane, which has a large footprint and increases costs.

The present invention is achieved to solve the above described problem, and has an object to provide a filtration equipment of hollow fiber membrane that eliminates the need for a wash pump or a backwash tank for washing off suspended matter or the like adhering to a hollow fiber filtration membrane.

### DISCLOSURE OF THE INVENTION

A filtration equipment of hollow fiber membrane in which raw liquid is passed through a hollow fiber membrane immersed in a treatment tank and filtered according to the present invention has a first configuration, including a plurality of hollow fiber filtration membrane modules in which filtrate discharge channels are connected to a filtrate discharge header pipe via on-off valves, the filtrate discharge header pipe is connected to a liquid suction port of a suction pump, an on-off valve is connected to the filtrate discharge header pipe connected to a liquid discharge port of the suction pump, and backwash channels are connected to a backwash header pipe branched from between the on-off valve of the filtrate discharge header pipe and the suction pump via on-off valves, and are communicated with the filtrate discharge channels upstream of the on-off valves thereof, and on-off operations of the on-off valves allow mutual backwash between the plurality of hollow fiber filtration membrane modules.

The filtration equipment of hollow fiber membrane according to the present invention has a second configuration, including air supply means provided in the treatment tank and aeration amount control means increasing an amount of air aeration by the air supply means during the mutual backwash between the plurality of hollow fiber filtration membrane modules in the first configuration.

The filtration equipment of hollow fiber membrane according to the present invention has a third configuration wherein the aeration amount control means increases an amount of air aeration by the air supply means entirely for the plurality of hollow fiber filtration membrane modules immersed in the treatment tank in the second configuration.

The filtration equipment of hollow fiber membrane according to the present invention has a fourth configuration wherein the aeration amount control means increases an amount of air aeration by the air supply means only for a hollow fiber filtration membrane module during backwash among the plurality of hollow fiber filtration membrane modules immersed in the treatment tank in the second configuration.

The filtration equipment of hollow fiber membrane according to the present invention has a fifth configuration wherein the aeration amount control means increases an amount of air aeration by the air supply means for an area formed between the hollow fiber filtration membrane module during backwash and a hollow fiber filtration membrane module during filtration among the plurality of hollow fiber filtration membrane modules immersed in the treatment tank in the second configuration.

The filtration equipment of hollow fiber membrane according to the present invention has a sixth configuration wherein stirring means is provided in the treatment tank, and the stirring means stirs a liquid in the treatment tank during the mutual backwash between the plurality of hollow fiber filtration membrane modules in the first configuration.

With the first configuration of the filtration equipment of hollow fiber membrane according to the present invention, the on-off operations of the on-off valves allow the mutual backwash between the plurality of hollow fiber filtration membrane modules, thereby eliminating the need for a wash pump or a backwash tank for washing off suspended matter adhering to a hollow fiber membrane, and reducing the size and cost of a filtration facility.

With the second configuration of the filtration equipment of hollow fiber membrane according to the present invention, during the mutual backwash between the plurality of hollow fiber filtration membrane modules immersed in the treatment tank, the aeration amount control means can increase the amount of air aeration to produce an ascending flow in a treatment liquid in the treatment tank, and thus suspended matter removed from a hollow fiber membrane during backwash is raised by the ascending flow to around a liquid level in the treatment tank. As a result, the ascending flow does not make the suspended matter adhere to a hollow fiber membrane during filtration.

With the third configuration of the filtration equipment of hollow fiber membrane according to the present invention, the aeration amount control means can increase the amount of air aeration entirely for the hollow fiber membrane during backwash and the hollow fiber membrane during filtration, thereby increasing a washing effect of the hollow fiber filtration membrane module during backwash and a re-adhesion preventing effect of suspended matter to the hollow fiber filtration membrane module during filtration.

With the fourth configuration of the filtration equipment of hollow fiber membrane according to the present invention, the aeration amount control means can increase the amount of air aeration only for the hollow fiber membrane during backwash to produce an ascending flow for the hollow fiber filtration membrane module during backwash. Thus, suspended matter removed from the hollow fiber filtration membrane module during backwash is retracted by the ascending flow to around the liquid level in the treatment tank to further produce a descending flow along the adjacent hollow fiber filtration membrane module during filtration and produce a swirling flow in the treatment tank, thereby efficiently increasing a washing effect of the hollow fiber filtration membrane module during backwash and a re-adhesion preventing effect of suspended matter to the hollow fiber filtration membrane module during filtration.

With the fifth configuration of the filtration equipment of hollow fiber membrane according to the present invention, the aeration amount control means can increase the amount of air aeration for the area formed between the hollow fiber membrane during backwash and the hollow fiber membrane during filtration to produce a stable swirling flow, thereby efficiently increasing a washing effect.

With the sixth configuration of the filtration equipment of hollow fiber membrane according to the present invention, during the mutual backwash between the plurality of hollow fiber filtration membrane modules immersed in the treatment tank, the stirring means stirs the liquid in the treatment tank, and thus the suspended matter removed from the hollow fiber membrane during backwash is retracted by a stirring flow. As a result, the stirring flow does not make the suspended matter adhere to the hollow fiber membrane during filtration.

### BRIEF DESCRIPTION OF THE DRAWINGS

Fig. 1A shows mutual backwash between a plurality of hollow fiber filtration membrane modules by on-off operations of on-off valves in a filtration equipment of hollow fiber membrane of an external pressure type;
Fig. 1B shows mutual backwash between a plurality of hollow fiber filtration membrane modules by on-off operations of on-off valves in a filtration equipment of hollow fiber membrane of an internal pressure type;
Fig. 1C shows mutual backwash between a plurality of hollow fiber filtration membrane modules by on-off operations of on-off valves in a filtration equipment of hollow fiber membrane in the case of the immersed membranes;
Fig. 2 shows a configuration including air supply means for supplying air during the mutual backwash between the plurality of hollow fiber filtration membrane modules in the case of the external pressure type;
Fig. 3 illustrates a configuration for controlling an amount of air aeration in the case of the immersed membranes;
Fig. 4 illustrates a configuration for controlling an amount of air aeration in the case of the immersed membranes;
Fig. 5 illustrates a configuration for controlling an amount of air aeration in the case of the immersed membranes;
Fig. 6 illustrates a configuration for controlling an amount of air aeration in the case of the immersed membranes; and
Fig. 7 illustrates a configuration for stirring inside a treatment tank in the case of the immersed membranes.

### BEST MODE FOR CARRYING OUT THE INVENTION

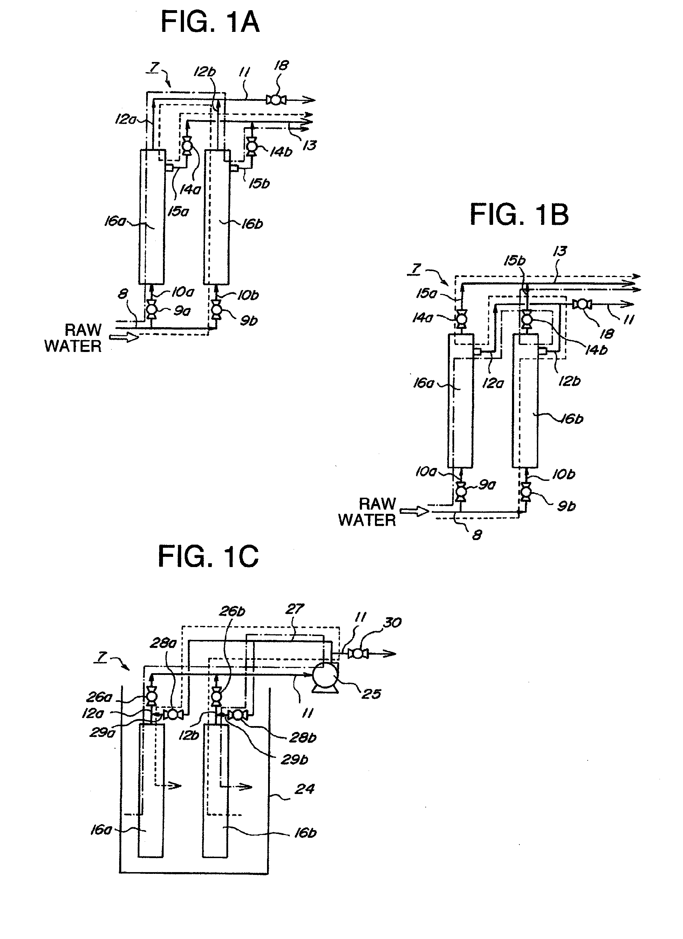

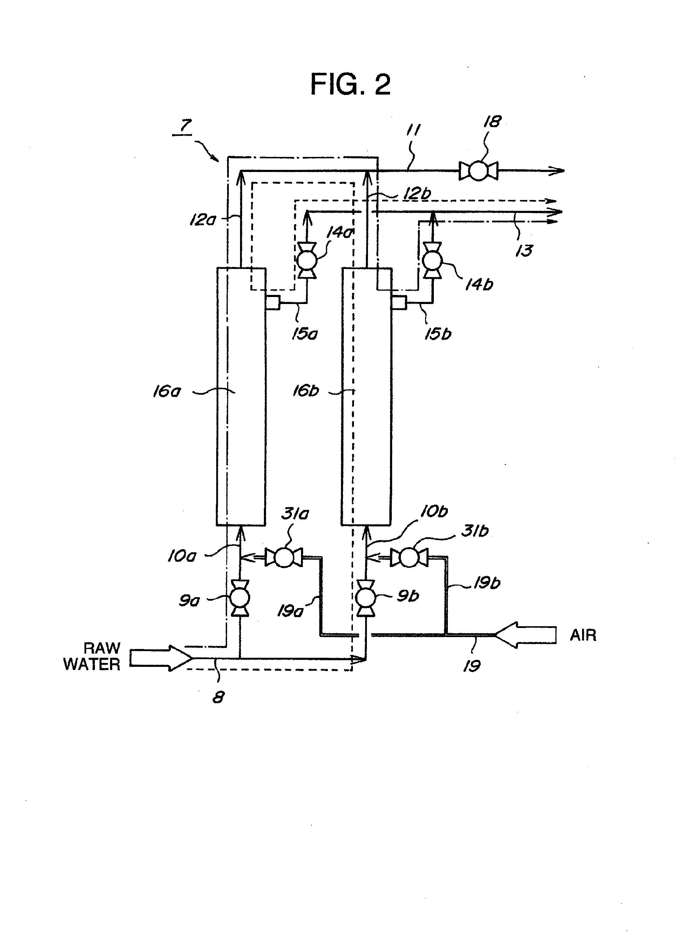

An embodiment of a filtration equipment of hollow fiber membrane according to the present invention will be described in detail with reference to the drawings. Fig. 1A to Fig. 1C show mutual backwash between a plurality of hollow fiber filtration membrane modules by on-off operations of on-off valves of the filtration equipment of hollow fiber membrane, and Fig. 1A shows a case of an external pressure type, Fig. 1B shows a case of an internal pressure type, and Fig. 1C shows a case of immersed membranes, and Fig. 2 shows a configuration including air supply means for supplying air during the mutual backwash between the plurality of hollow fiber filtration membrane modules in the case of the external pressure type.

Fig. 1A to Fig. 1C show mutual backwash between a pair of hollow fiber filtration membrane modules 16a and 16b by on-off operations of on-off valves of a filtration equipment of hollow fiber membrane 7, Fig. 1A shows mutual backwash between membranes in a case of an external pressure type with hollow fiber membranes housed in a casing, Fig. 1B shows mutual backwash between membranes in a case of an internal pressure type with hollow fiber membranes housed in a casing, and Fig. 1C shows mutual backwash between membranes in a case of immersed membranes with hollow fiber membranes immersed in a treatment tank.

As shown in Fig. 1A, the filtration equipment of hollow fiber membrane 7 of the external pressure type in which pressure is applied to raw liquid from outside of the hollow fiber membranes housed in the casing to cause filtrate to pass inside the hollow fiber membranes includes a pair of hollow fiber filtration membrane modules 16a and 16b, in which raw liquid supply channels 10a and 10b are connected to a shared raw liquid supply header pipe 8, to which raw liquid is supplied by an unshown supply pump, via on-off valves 9a and 9b, filtrate discharge channels 12a and 12b are connected to a shared filtrate discharge header pipe 11, the filtrate discharge header pipe 11 has an on-off valve 18, and return raw liquid channels 15a and 15b are connected to a shared return raw liquid header pipe 13 via on-off valves 14a and 14b so that on-off operations of the on-off valves 9a, 9b, 14a, 14b and 18 allow mutual backwash between the pair of hollow fiber filtration membrane modules 16a and 16b.

Next, with reference to Fig. 1A, operations of filtration and of the mutual backwash between the pair of hollow fiber filtration membrane modules 16a and 16b will be described. First, in a filtration operation, the on-off valves 9a and 9b and the on-off valve 18 provided downstream of the filtrate discharge channels 12a and 12b in the filtrate discharge header pipe 11 in a filtrate flowing direction (the right side in Fig. 1A) are opened, the raw liquid is passed from the outside to the inside (external pressure type filtration) of the hollow fiber membranes of the hollow fiber filtration membrane modules 16a and 16b, with the on-off valves 14a and 14b being closed, for entire filtration, or part of the raw liquid is returned from the return raw liquid channels 15a and 15b via the return raw liquid header pipe 13 to an unshown raw liquid tank, with the on-off valves 14a and 14b being opened, for circulation filtration.

Next, in the mutual backwash operation between the pair of hollow fiber filtration membrane modules 16a and 16b, for a backwash operation of the hollow fiber filtration membrane module 16a, with the on-off valves 9b and 14a being opened and the on-off valves 9a, 14b and 18 being closed, the raw lqiuid is passed from the outside to the inside (external pressure type filtration) of the hollow fiber membrane of the hollow fiber filtration membrane module 16b and filtered, and the filtrate is caused to flow back to the filtrate discharge channel 12a of the hollow fiber filtration membrane module 16a and passed from the inside to the outside of the hollow fiber membrane, and suspended matter adhering to the hollow fiber membrane is removed and discharged to the outside from the return raw liquid channel 15a via the return raw liquid header pipe 13.

Similarly, for a backwash operation of the hollow fiber filtration membrane module 16b, with the on-off valves 9a and 14a being opened and the on-off valves 9b, 14a and 18 being closed, the raw liquid is passed from the outside to the inside (external pressure type filtration) of the hollow fiber membrane of the hollow fiber filtration membrane module 16a and filtered, and the filtrate is caused to flow back to the filtrate discharge channel 12b of the hollow fiber filtration membrane module 16b and passed from the inside to the outside of the hollow fiber membrane, and suspended matter adhering to the hollow fiber membrane is removed and discharged to the outside from the return raw liquid channel 15b via the return raw liquid header pipe 13.

In a flushing operation for simply washing outer surfaces of the hollow fiber membranes of the hollow fiber filtration membrane modules 16a and 16b, with the on-off valves 9a, 9b, 14a and 14 being opened and the on-off valve 18 being closed, the raw liquid is supplied from the raw liquid supply header pipe 8 to the raw liquid supply channels 10a and 10b and passed through the outside of the hollow fiber membranes of the hollow fiber filtration membrane modules 16a and 16b, and suspended matter adhering to the outer surfaces of the hollow fiber membranes are removed and discharged to the outside from the return raw liquid channels 15a and 15b via the return raw liquid header pipe 13.

As shown in Fig. 1B, the filtration equipment of hollow fiber membrane 7 of the internal pressure type in which pressure is applied to raw liquid from inside of the hollow fiber membranes housed in the casing to cause filtrate to pass outside the hollow fiber membranes is also configured as in Fig. 1A so that on-off operations of on-off valves 9a, 9b, 14a, 14b and 18 allow mutual backwash between a pair of hollow fiber filtration membrane modules 16a and 16b.

In Fig. 1B, in a filtration operation, the on-off valves 9a and 9b and the on-off valve 18 provided downstream of filtrate discharge channels 12a and 12b in a filtrate discharge header pipe 11 in a filtrate flowing direction (the right side in Fig. 1B) are opened, the raw liquid is passed from the inside to the outside (internal pressure type filtration) of the hollow fiber membranes of the hollow fiber filtration membrane modules 16a and 16b, with the on-off valves 14a and 14b being closed, for entire filtration, or part of the raw liquid is returned from return raw liquid channels 15a and 15b via a return raw liquid header pipe 13 to an unshown raw liquid tank, with the on-off valves 14a and 14b being opened, for circulation filtration.

Next, in Fig. 1C, in the mutual backwash operation between the pair of hollow fiber filtration membrane modules 16a and 16b, for a backwash operation of the hollow fiber filtration membrane module 16a, with the on-off valves 9b and 14a being opened and the on-off valves 9a, 14b and 18 being closed, the raw liquid is passed from the inside to the outside (internal pressure type filtration) of the hollow fiber membrane of the hollow fiber filtration membrane module 16b and filtered, and the filtrate is caused to flow back to the filtrate discharge channel 12a of the hollow fiber filtration membrane module 16a and passed from the outside to the inside of the hollow fiber membrane, and suspended matter adhering to the hollow fiber membrane is removed and discharged to the outside from the return raw liquid channel 15a via the return raw liquid header pipe 13.

Similarly, for a backwash operation of the hollow fiber filtration membrane module 16b, with the on-off valves 9a and 14b being opened and the on-off valves 9b, 14a and 18 being closed, the raw liquid is passed from the inside to the outside (internal pressure type filtration) of the hollow fiber membrane of the hollow fiber filtration membrane module 16a and filtered, and the filtrate is caused to flow back to the filtrate discharge channel 12b of the hollow fiber filtration membrane module 16b and passed from the outside to the inside of the hollow fiber membrane, and suspended matter adhering to the hollow fiber membrane is removed and discharged to the outside from the return raw liquid channel 15b via the return raw liquid header pipe 13.

As shown in Fig. 1C, the filtration equipment of hollow fiber membrane 7 of the immersion type in which bare hollow fiber membranes having one closed ends are immersed in a treatment tank 24, raw liquid in the treatment tank 24 is sucked from the other open ends of the hollow fiber membranes by a suction pump 25, passed through the hollow fiber membranes and filtered, and the filtrate is pumped up includes a pair of hollow fiber filtration membrane modules 16a, 16b, in which the raw liquid is supplied into the treatment tank 24 by an unshown supply pump, filtrate discharge channels 12a and 12b are connected to a shared filtrate discharge header pipe 11 via on-off valves 26a and 26b, the filtrate discharge header pipe 11 is connected to a liquid suction port of the suction pump 25, an on-off valve 30 is connected to the filtrate discharge header pipe 11 connected to a liquid discharge port of the suction pump 25, backwash channels 29a and 29b are connected to a shared backwash header pipe 27 branched from between the on-off valve 30 of the filtrate discharge header pipe 11 and the suction pump 25 via on-off valves 28a and 28b, and are communicated with the filtrate discharge channels 12a and 12b upstream of the on-off valves 26a and 26b thereof so that on-off operations of the on-off valves 26a, 26b, 28a, 28b and 30 allow mutual backwash between the pair of hollow fiber filtration membrane modules 16a and 16b.

Next, with reference to Fig. 1C, an operation of the mutual backwash between the pair of hollow fiber filtration membrane modules 16a and 16b will be described. First, in a filtration operation, the on-off valves 26a and 26b and the on-off valve 30 provided downstream of the suction pump 25 in the filtrate discharge header pipe 11 in a filtrate flowing direction (the right side in Fig. 1C) are opened, the suction pump 25 is driven to suck the raw liquid stored in the treatment tank 24 with the on-off valves 28a and 28b being closed, and the raw liquid is passed from the outside to the inside of the hollow fiber membranes of the hollow fiber filtration membrane modules 16a and 16b.

Next, in the mutual backwash operation between the pair of hollow fiber filtration membrane modules 16a and 16b, for a backwash operation of the hollow fiber filtration membrane module 16a, with the on-off valves 26b and 28a being opened and the on-off valves 26a, 28b and 30 being closed, the suction pump 25 is driven to suck the raw liquid stored in the treatment tank 24, the raw liquid is passed from the outside to the inside of the hollow fiber membrane of the hollow fiber filtration membrane module 16b, the filtrate is caused to flow back to the filtrate discharge channel 12a of the hollow fiber filtration membrane module 16a and passed from the inside to the outside of the hollow fiber membrane, and suspended matter adhering to the hollow fiber membrane is removed and discharged into the treatment tank 24.

Similarly, for a backwash operation of the hollow fiber filtration membrane module 16b, with the on-off valves 26a and 28b being opened and the on-off valves 26b, 28a and 30 being closed, the suction pump 25 is driven to suck the raw liquid stored in the treatment tank 24, the raw liquid is passed from the outside to the inside of the hollow fiber membrane of the hollow fiber filtration membrane module 16a, the filtrate is caused to flow back to the filtrate discharge channel 12b of the hollow fiber filtration membrane module 16b and passed from the inside to the outside of the hollow fiber membrane, and suspended matter adhering to the hollow fiber membrane is removed and discharged into the treatment tank 24.

Fig. 2 shows an example of the filtration equipment of hollow fiber membrane 7 of the external pressure filtration type described above with reference to Fig. 1A, in which air supply branch pipes 19a and 19b branched from an air supply header pipe 19 that is air supply means for supplying air during mutual backwash between a pair of hollow fiber filtration membrane modules 16a and 16b communicate with raw liquid supply channels 10a and 10b via on-off valves 31a and 31b. The mutual backwash operation between the hollow fiber filtration membrane modules 16a and 16b is as described above with reference to Fig. 1A, and during backwash of each of the hollow fiber filtration membrane modules 16a and 16b, the on-off valves 31a and 31b corresponding to the hollow fiber filtration membrane modules 16a and 16b can be opened as appropriate for a backwash operation by air bubbling.

In the above described embodiment, the pair of hollow fiber filtration membrane modules 16a and 16b refer to one or a plurality of groups of hollow fiber filtration membrane modules that produce filtrate for backwash, and one or a plurality of groups of filtration membrane modules to be backwashed, in a pair. The pair of hollow fiber filtration membrane modules 16a and 16b also include one or a plurality of groups of hollow fiber filtration membrane modules connected to separate header pipes, besides the hollow fiber filtration membrane modules connected to a shared header pipe.

With the above described configuration, automatic or manual on-off operations of the on-off valves allow the mutual backwash between the pair of hollow fiber filtration membrane modules 16a and 16b, thereby eliminating the need for a wash pump or a backwash tank for washing off suspended matter adhering to the hollow fiber membranes, and reducing the size and cost of a filtration facility.

Also, the air supply pipe that is the air supply means supplies air during the mutual backwash between the pair of hollow fiber filtration membrane modules 16a and 16b, thereby shaking the hollow fiber membranes to increase a washing effect.

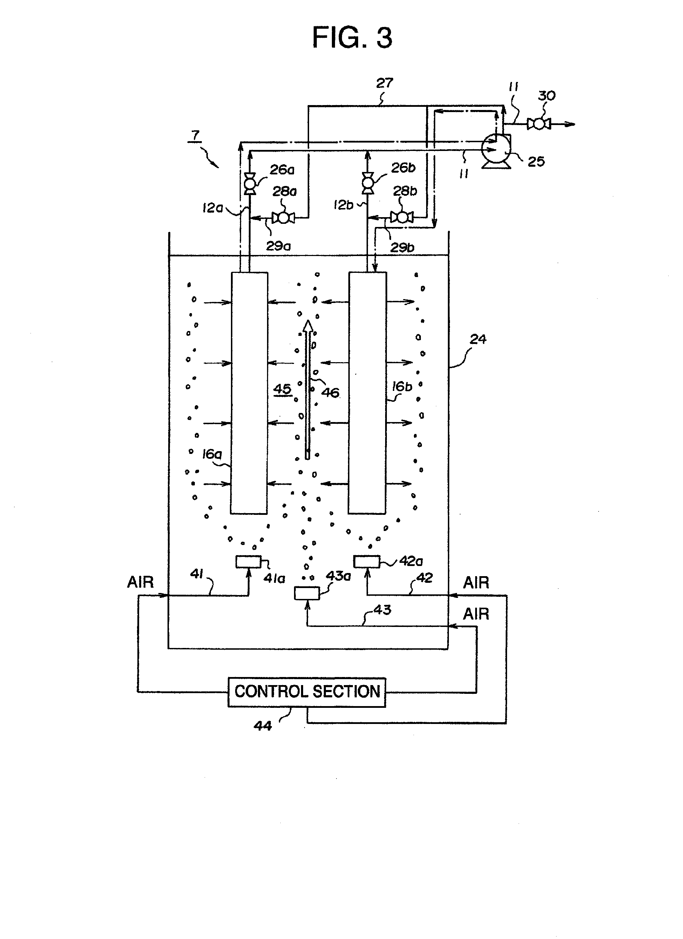

Next, another configuration of a filtration equipment of hollow fiber membrane according to the present invention will be described with reference to Figs. 3 to 6. The same components as in the above described embodiment will be denoted by the same reference numerals, and descriptions thereof will be omitted. In this embodiment, as shown in Figs. 3 to 6, air supply pipes 41, 42 and 43 are provided that are air supply means having aeration openings 41a, 42a and 43a placed at the bottom in a treatment tank 24, and an aeration amount control portion 44 is provided that is aeration amount control means for increasing or decreasing an amount of air aeration by the air supply pipes 41, 42 and 43 that are the air supply means during mutual backwash between a plurality of hollow fiber filtration membrane modules 16a and 16b immersed in the treatment tank 24 as described above with reference to Fig. 1C. The increase of the amount of air aeration is preferable, because it increases a washing effect of the hollow fiber filtration membrane module and a re-adhesion preventing effect of suspended matter to the hollow fiber filtration membrane module.

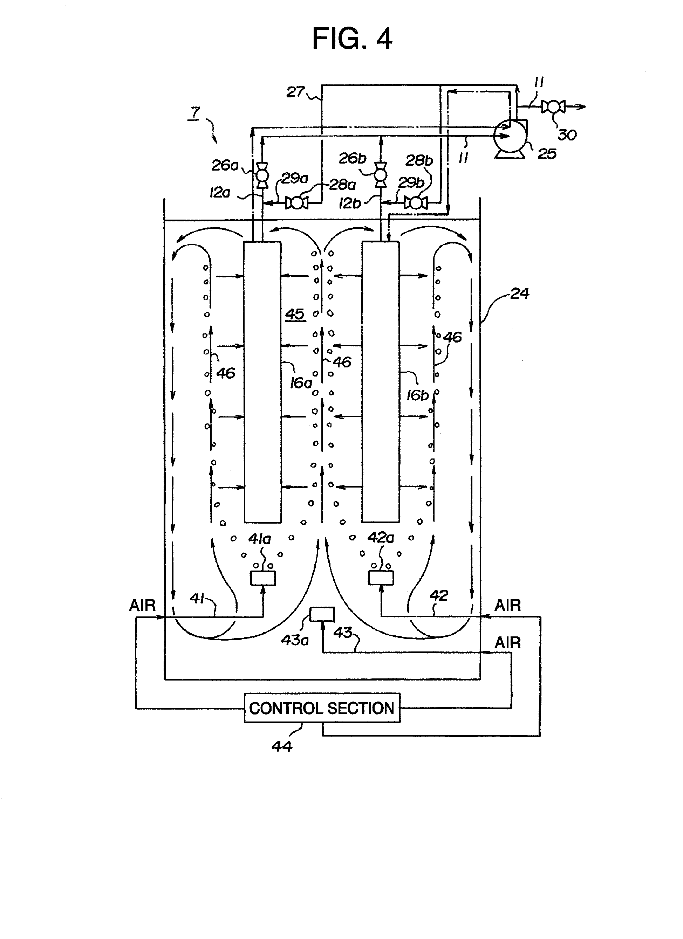

As shown in Fig. 3, the aeration amount control section 44 in the embodiment can perform control to increase the amount of air aeration by the air supply pipes 41, 42 and 43 that are the air supply means entirely for the plurality of hollow fiber filtration membrane modules 16a and 16b immersed in the treatment tank 24. Fig. 4 shows control to increase an amount of air aeration by the air supply pipes 41 and 42 provided below the hollow fiber filtration membrane modules 16a and 16b.

With the above described configuration, the aeration amount control section 44 that is the aeration amount control means increases the amount of air aeration entirely for a hollow fiber membrane during backwash and a hollow fiber membrane during filtration, thereby increasing a washing effect of the hollow fiber filtration membrane module during backwash (hollow fiber filtration membrane module 16b in Figs. 3 and 4) and a re-adhesion preventing effect of suspended matter to the hollow fiber filtration membrane module during filtration (hollow fiber filtration membrane module 16a in Figs. 3 and 4).

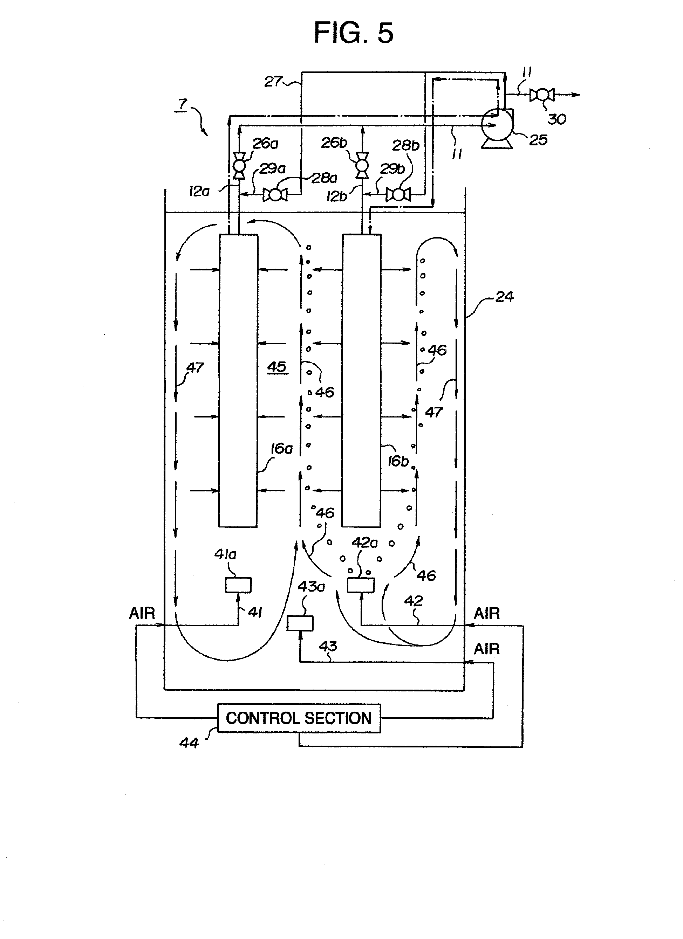

As shown in Fig. 5, the aeration amount control section 44 in the embodiment can also perform control to increase an amount of air aeration by the air supply pipe 42 that is the air supply means only for the hollow fiber filtration membrane module during backwash (hollow fiber filtration membrane modules 16b in Fig. 5) in the plurality of hollow fiber filtration membrane modules 16a and 16b immersed in the treatment tank 24.

With the above described configuration, the aeration amount control section 44 that is the aeration amount control means can increase the amount of air aeration only for the hollow fiber membrane during backwash to produce an ascending flow 46 for the hollow fiber filtration membrane module during backwash (hollow fiber filtration membrane module 16b in Fig. 5). Thus, suspended matter removed from the hollow fiber filtration membrane module during backwash (hollow fiber filtration membrane module 16b in Fig. 5) is retracted by the ascending flow 46 to around a liquid level in the treatment tank 24 to further produce a descending flow 47 along the adjacent hollow fiber filtration membrane module during filtration (hollow fiber filtration membrane module 16a in Fig. 5) and produce a swirling flow in the treatment tank 24, thereby efficiently increasing a washing effect of the hollow fiber filtration membrane module during backwash (hollow fiber filtration membrane module 16b in Fig. 5) and a re-adhesion preventing effect of suspended matter to the hollow fiber filtration membrane module during filtration (hollow fiber filtration membrane module 16a in Fig. 5).

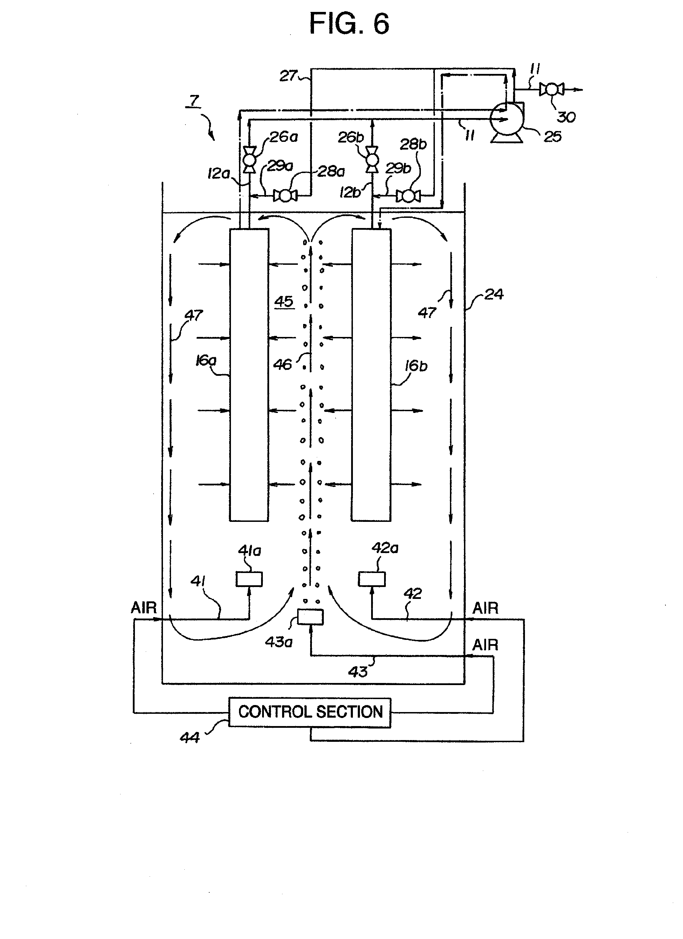

As shown in Fig. 6, the aeration amount control section 44 in the embodiment can also perform control to increase an amount of air aeration by the air supply pipe 43 that is the air supply means for an intermediate area 45 formed between the hollow fiber filtration membrane module during backwash (hollow fiber filtration membrane modules 16b in Fig. 6) and the hollow fiber filtration membrane module during filtration (hollow fiber filtration membrane modules 16a in Fig. 6) in the plurality of hollow fiber filtration membrane modules 16a and 16b immersed in the treatment tank 24.

With the above described configuration, the aeration amount control section 44 that is the aeration amount control means can increase the amount of air aeration for the intermediate area 45 formed between a hollow fiber membrane during backwash and a hollow fiber membrane during filtration to produce a stable swirling flow, thereby efficiently increasing a washing effect.

With the above described configurations, during the mutual backwash between the plurality of hollow fiber filtration membrane modules 16a and 16b immersed in the treatment tank 24, the aeration amount control section 44 that is the aeration amount control means can increase the amount of air aeration to produce the ascending flow 46 in a treatment liquid in treatment tank 24. Thus, suspended matter removed from the hollow fiber membrane during backwash is retracted by the ascending flow 46 to around a liquid level in the treatment tank 24 and does not adhere to the hollow fiber membrane during filtration.

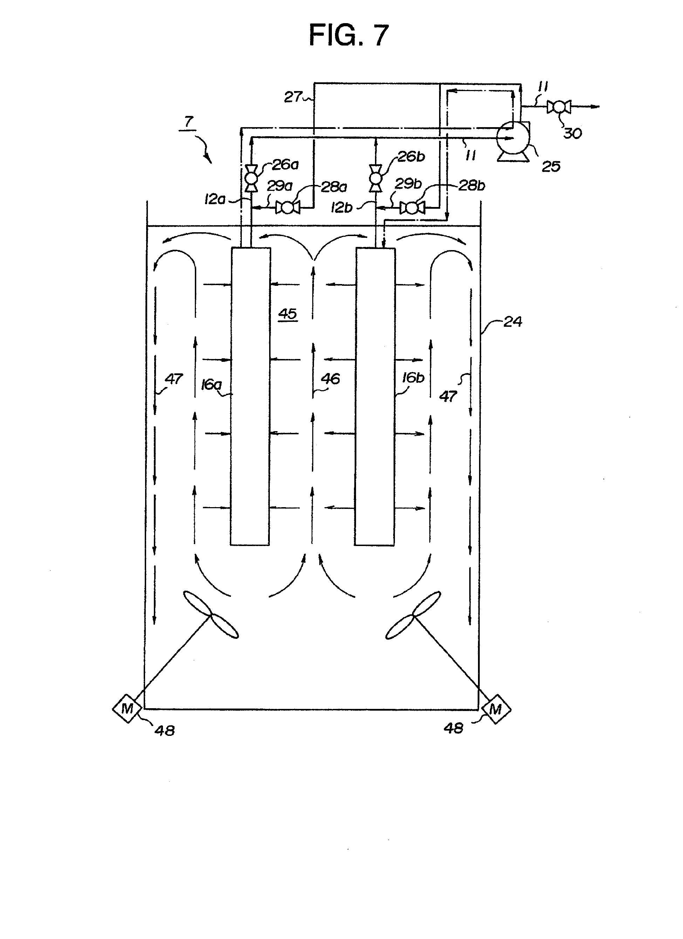

Next, a further configuration of a filtration equipment of hollow fiber membrane according to the present invention will be described with reference to Fig. 7. The same components as in the above described embodiment will be denoted by the same reference numerals, and descriptions thereof will be omitted. In this embodiment, as shown in Fig. 7, a stirrer 48 that is stirring means is provided at the bottom of a treatment tank 24, and a liquid in the treatment tank 24 is stirred by the stirrer 48 during mutual backwash between a plurality of hollow fiber filtration membrane modules 16a and 16b.

With the above described configuration, the liquid in the treatment tank 24 is stirred by the stirrer 48 during the mutual backwash between the plurality of hollow fiber filtration membrane modules 16a and 16b immersed in the treatment tank 24, and thus suspended matter removed from a hollow fiber membrane during backwash is retracted by a stirring flow and does not adhere to a hollow fiber membrane during filtration.

### INDUSTRIAL APPLICABILITY

The present invention may be applied to a filtration equipment of hollow fiber membrane that allows mutual backwash between hollow fiber filtration membrane modules.

### DESCRIPTION OF REFERENCE NUMERALS

- 7: filtration equipment of hollow fiber membrane
- 8: raw liquid supply header pipe
- 9a, 9b: on-off valve
- 10a, 10b: raw liquid supply channel
- 11: filtrate discharge header pipe
- 12a, 12b: filtrate discharge channel
- 13: return raw liquid header pipe
- 14a, 14b: on-off valve
- 15a, 15b: return raw liquid channel
- 16a, 16b: hollow fiber filtration membrane module
- 18: on-off valve
- 19: air supply header pipe
- 19a, 19b: air supply branch pipe
- 24: treatment tank
- 25: suction pump
- 26a, 26b: on-off valve
- 27: backwash header pipe
- 28a, 28b: on-off valve
- 29a, 29b: backwash channel
- 30: on-off valve
- 31a, 31b: on-off valve
- 41 to 43: air supply pipe
- 41a to 43a: aeration opening
- 44: aeration amount control section
- 45: intermediate area
- 46: ascending flow
- 47: descending flow
- 48: stirrer

## Claims

1. A filtration equipment of hollow fiber membrane in which raw liquid is passed through a hollow fiber membrane immersed in a treatment tank and filtered, comprising a plurality of hollow fiber filtration membrane modules in which filtrate discharge channels are connected to a filtrate discharge header pipe via on-off valves, the filtrate discharge header pipe is connected to a liquid suction port of a suction pump, an on-off valve is connected to the filtrate discharge header pipe connected to a liquid discharge port of the suction pump, and backwash channels are connected to a backwash header pipe branched from between the on-off valve of the filtrate discharge header pipe and the suction pump via on-off valves, and are communicated with the filtrate discharge channels upstream of the on-off valves thereof, and
on-off operations of the on-off valves allow mutual backwash between the plurality of hollow fiber filtration membrane modules.

2. The filtration equipment of hollow fiber membrane according to claim 1, comprising air supply means provided in the treatment tank and aeration amount control means increasing an amount of air aeration by the air supply means during the mutual backwash between the plurality of hollow fiber filtration membrane modules.

3. The filtration equipment of hollow fiber membrane according to claim 2, wherein the aeration amount control means increases an amount of air aeration by the air supply means entirely for the plurality of hollow fiber filtration membrane modules immersed in the treatment tank.

4. The filtration equipment of hollow fiber membrane according to claim 2, wherein the aeration amount control means increases an amount of air aeration by the air supply means only for a hollow fiber filtration membrane module during backwash among the plurality of hollow fiber filtration membrane modules immersed in the treatment tank.

5. The filtration equipment of hollow fiber membrane according to claim 2, wherein the aeration amount control means increases an amount of air aeration by the air supply means for an area formed between the hollow fiber filtration membrane module during backwash and a hollow fiber filtration membrane module during filtration among the plurality of hollow fiber filtration membrane modules immersed in the treatment tank.

6. The filtration equipment of hollow fiber membrane according to claim 1, wherein stirring means is provided in the treatment tank, and the stirring means stirs a liquid in the treatment tank during the mutual backwash between the plurality of hollow fiber filtration membrane modules.
